# EUROPEAN PATENT APPLICATION

(11) **EP 4 765 767 A1**
(43) Date of publication of application: **24.06.2026**
(21) Application number: 25167116.0
(22) Date of filing: 28.03.2025
(51) Int. Cl.: H04L 61/2553

(54) **COMMUNICATION METHOD AND A BRANCH APPARATUS**

(30) Priority: 23.12.2024 CN 202411903482
(71) Applicant: New H3C Technologies Co., Ltd., Hangzhou, Zhejiang 310052 (CN)
(72) Inventor: GONG, Yuande, Beijing, 100102 (CN)
(74) Representative: IPAZ

(57) **Abstract**

The present disclosure provides a network communication method and a branch apparatus. The method is applied to a branch apparatus which communicates with a central apparatus through a public network. The method includes: receiving a public IP address sent by the central apparatus after determining that a network address translation, NAT, gateway exists between the branch apparatus and the public network, wherein the public IP address is an internet protocol, IP, address of a target interface included in a target NAT gateway; sending a probe request packet to the target interface, the probe request packet including a destination IP address, the destination IP address being different from the public IP address and in the same network segment as the public IP address; obtaining the number of network apparatuses in a forwarding path for forwarding the probe request packet based on a probe result; sending a NAT keepalive packet to the central apparatus based on a preset period, the NAT keepalive packet including a first time to live, TTL, the first TTL being a sum of the number and a first value. Implementing the method provided in the present disclosure may avoid the impact on traffic forwarding of the central apparatus caused by the NAT keepalive packets.

## Description

### CROSS-REFERENCE TO RELATED APPLICATIONS

This application claims priority to Chinese Patent Application No. 2024119034821, filed on December 23th, 2024, the disclosure of which is incorporated herein by reference in its entirety for all purposes.

### TECHNICAL FIELD

The present disclosure relates to the field of network technology, particularly to a communication method and a branch apparatus.

### BACKGROUND

In current network architectures, network address translation, NAT, gateways often exist between branch apparatuses and central apparatuses. A NAT gateway performs NAT conversion on traffic issued from a branch apparatus, which refers converting IP addresses in IP data packet headers of the traffic. This enables apparatuses within an internal network to access an external public network and allows the external public network to access certain internal network resources. As a result, the traffic visible to the central apparatus from the branch apparatus is often sent by the NAT gateway.

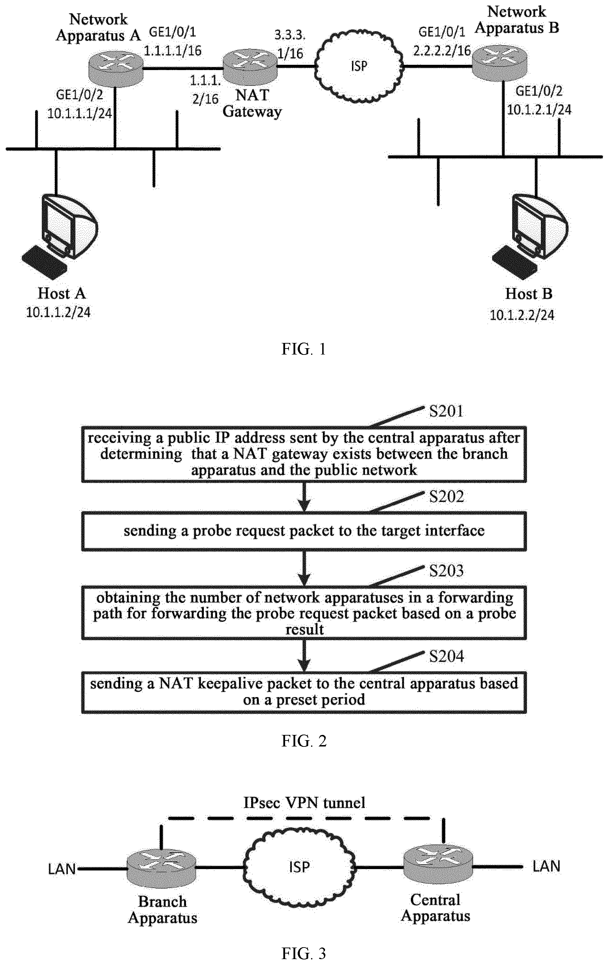

Refer to FIG. 1, which illustrates a schematic diagram of a network structure in related arts.

In the diagram, network apparatus A is a branch apparatus, network apparatus B is a central apparatus, and the internet service provider, ISP, between network apparatus A and network apparatus B represents the external public network. A NAT gateway exists between network apparatus A and the ISP. Network apparatus A is connected to hosts, with host A shown in the diagram. Network apparatus B is connected to hosts, with host B shown in the diagram. As may be seen from the diagram, the IP address of host A is 10.1.1.2/24, the IP address of interface GE1/0/2 of network apparatus A is 10.1.1.1/24, the IP address of interface GE1/0/1 of network apparatus A is 1.1.1.1/16, the IP address of an interface connecting the NAT gateway to network apparatus A is 1.1.1.2/16, and the IP address of an interface connecting the NAT gateway to the ISP is 3.3.3.1/16. It is evident that the NAT gateway may convert IP addresses in IP data packet headers. The IP address of GE1/0/1 of network apparatus B is 2.2.2.2/16, and the IP address of GE1/0/2 of network apparatus B is 10.1.2.1/24. The IP address of host B is 10.1.2.2/24.

Internet key exchange, IKE, technology supports NAT negotiation and discovery, meaning that both parties in an IKE session (the branch apparatus and the central apparatus) may detect whether a NAT gateway exists between their links. In response to determining that a NAT gateway is present, after negotiating and establishing IKE and internet protocol security, IPSec, tunnels between the branch apparatus and the central apparatus, in common scenarios, the branch apparatus needs to send NAT keepalive packets to the central apparatus on a periodical basis, to keep the NAT session on the NAT gateway alive. The NAT keepalive packets are user datagram protocol, UDP, packets, and based on the protocol, the common destination port number for the NAT keepalive packets is 4500, with the payload fixed at 0xFF. Upon receiving a NAT keepalive packet, the central apparatus does not need to respond and should ignore the NAT keepalive packet. In theory, the central apparatus also needs to be kept alive, but for UDP bidirectional packets, the NAT session may be kept alive with traffic packets in just one direction. Therefore, in most scenarios, it is the branch apparatus that initiates NAT keepalive. NAT keepalive may prevent addresses and ports of IPSec and IKE packets from being re-converted after the NAT session ages, which could cause the central apparatus to fail to recognize or recognize them incorrectly, thereby affecting communication between the branch apparatus and the central apparatus.

However, in large-scale networking, the central apparatus often interfaces with hundreds or even more branch apparatuses, and each branch apparatus needs to send NAT keepalive packets to the central apparatus to keep the NAT session alive. For the central apparatus, this means the central apparatus needs to receive a large number of NAT keepalive packets that need to be ignored, which consumes the central apparatus's traffic processing resources and affects central apparatus's ability to receive other traffic. During peak traffic times, the impact on the central apparatus's traffic forwarding is greater.

### SUMMARY

The purpose of the examples of the present disclosure is to provide a communication method, a branch apparatus, and a device, in order to avoid the impact of network address translation, NAT, keepalive packets on traffic forwarding by a central apparatus. The specific technical solutions are as follows:

In a first aspect, an example of the present disclosure provides a communication method applied to a branch apparatus, wherein the branch apparatus is connected to a central apparatus via a public network, and the method includes:
receiving a public internet protocol, IP, address sent by the central apparatus after determining that a NAT gateway exists between the branch apparatus and the public network, wherein the public IP address is an IP address of a target interface included in a target NAT gateway, the target interface being connected to the public network, and the target NAT gateway being a NAT gateway closest to the public network among NAT gateways between the branch apparatus and the public network;
sending a probe request packet to the target interface, the probe request packet includes a destination IP address, the destination IP address being different from the public IP address and in the same network segment as the public IP address;
obtaining the number of network apparatuses in a forwarding path for forwarding the probe request packet based on a probe result;
sending a NAT keepalive packet to the central apparatus based on a preset period, the NAT keepalive packet includes a first time to live, TTL, the first TTL being a sum of the number and a first value.
In a second aspect, an example of the present disclosure provides a branch apparatus, which communicates with a central apparatus through a public network, and the branch apparatus includes:
   a processor;
   a transceiver;
   a machine-readable storage medium having stored thereon machine-executable instructions executable by the processor, wherein the machine-executable instructions cause the processor to execute following processes:
      receiving a public IP address sent by the central apparatus after determining that a NAT gateway exists between the branch apparatus and the public network, wherein the public IP address is an IP address of a target interface included in a target NAT gateway, the target interface being connected to the public network, and the target NAT gateway being a NAT gateway closest to the public network among NAT gateways between the branch apparatus and the public network;
      sending a probe request packet to the target interface, wherein the probe request packet includes a destination IP address, the destination IP address being different from the public IP address and in the same network segment as the public IP address;
      obtaining the number of network apparatuses in a forwarding path for forwarding the probe request packet based on a probe result;
      sending a NAT keepalive packet to the central apparatus based on a preset period, wherein the NAT keepalive packet includes a first TTL, the first TTL being a sum of the number and a first value.

In a third aspect, an example of the present disclosure provides a NAT keepalive device applied to a branch apparatus which communicates with a central apparatus through a public network, the NAT keepalive device including:
an IP address receiving module, to receive a public IP address sent by the central apparatus after determining that a NAT gateway exists between the branch apparatus and the public network, wherein the public IP address is an IP address of a target interface included in a target NAT gateway, the target interface being connected to the public network, and the target NAT gateway being a NAT gateway closest to the public network among NAT gateways between the branch apparatus and the public network;
a probe packet sending module, to send a probe request packet to the target interface, wherein the probe request packet includes a destination IP address, the destination IP address being different from the public IP address and in the same network segment as the public IP address;
a number determining module, to obtain the number of network apparatuses in a forwarding path for forwarding the probe request packet based on a probe result;
a keepalive packet sending module, to send a NAT keepalive packet to the central apparatus based on a preset period, wherein the NAT keepalive packet includes a first TTL, the first TTL being a sum of the number and a first value.

In a fourth aspect, an example of the present disclosure provides a computer-readable storage medium, wherein the computer-readable storage medium stores a computer program, which, when executed by a processor, carries out any of the method processes described in the first aspect.

In a fifth aspect, an example of the present disclosure further provides a computer program product containing instructions, which, when run on a computer, causes the computer to carry out any of the method processes described in the aforementioned first aspect.

Beneficial effects of the examples of the present disclosure are as follows:
in the solution provided by the examples of the present disclosure, after the branch apparatus receives the public network IP address sent by the central apparatus after determining that a NAT gateway exists between the branch apparatus and the public network, the branch apparatus determines the number of network apparatuses in the forwarding path between the branch apparatus and the target interface. The target interface is the interface connecting to the public network on the NAT gateway which is closest to the public network among NAT gateways between the branch apparatus and the public network. After determining the number, the NAT keepalive packet is sent based on the preset period, and the first TTL of the NAT keepalive packet is the sum of the number and the first value. That is, the first TTL is greater than the number of network apparatuses between the branch apparatus and the target interface, so the NAT keepalive packet may be sent to the target NAT gateway for reception. Since the target NAT gateway is the NAT gateway closest to the public network among NAT gateways between the branch apparatus and the public network, all NAT gateways between the branch apparatus and the public network may receive the NAT keepalive packet, thereby keeping them alive. However, the TTL of the NAT keepalive packet is the sum of the number and the first value, so the NAT packet will be discarded soon after passing through the target interface and will hardly be transmitted in the public network, let alone transmitted to the central apparatus. Therefore, the NAT keepalive packet will not affect the traffic forwarding of the central apparatus.

### BRIEF DESCRIPTION OF THE DRAWINGS

In order to illustrate the technical solutions more clearly in the examples of the present disclosure or in the prior art, the accompanying drawings required for the description of the examples or the prior art will be introduced below. It is obvious that the accompanying drawings in the following description are merely some examples of the present disclosure. For those skilled in the art, other examples may be obtained based on these drawings.
FIG. 1 is a schematic diagram of a network structure in related technology;
FIG. 2 is a schematic diagram of a first NAT keepalive method provided by an example of the present disclosure;
FIG. 3 is a schematic diagram of a first distribution of a NAT gateway provided by an example of the present disclosure;
FIG. 4 is a schematic diagram of a second distribution of a NAT gateway provided by an example of the present disclosure;
FIG. 5 is a schematic diagram of a third distribution of a NAT gateway provided by an example of the present disclosure;
FIG. 6 is a schematic diagram of a fourth distribution of NAT gateways provided by an example of the present disclosure;
FIG. 7 is a schematic diagram of a format of a NAT keepalive packet provided by an example of the present disclosure;
FIG. 8 is a schematic diagram of a second NAT keepalive method provided by an example of the present disclosure;
FIG. 9 is a schematic diagram of a third NAT keepalive method provided by an example of the present disclosure;
FIG. 10 is a schematic diagram of a structure of a branch apparatus provided by an example of the present disclosure;
FIG. 11 is a schematic diagram of a structure of a NAT keepalive device provided by an example of the present disclosure.

### DETAILED DESCRIPTION

The following is a clear and complete description of the technical solutions in the examples of the present disclosure, in conjunction with the accompanying drawings in the examples of the present disclosure. It is obvious that the described examples are merely a part of the present disclosure, rather than all of them. Based on the examples in the present disclosure, all other examples obtained by those skilled in the art based on the present disclosure fall within the scope of protection of the present disclosure.

During the process of NAT keepalive in related arts, the central apparatus receives a large number of NAT keepalive packets, which affects the normal traffic forwarding of the central apparatus. In order to solve the above problem, the examples of the present disclosure provide a NAT keepalive method, a branch apparatus, and a device.

Refer to FIG. 2, which is a schematic diagram of a first NAT keepalive method provided by an example of the present disclosure, applied to a branch apparatus. The branch apparatus is connected to a central apparatus via a public network for communication. The method includes the following processes S201 to S204. In detail, the central apparatus is often communicatively connected to multiple branch apparatuses through an IPsec virtual private network, VPN, via the public network. For example, the central apparatus is located at the headquarters of an enterprise, and the branch apparatuses are located at different branches of the enterprise, respectively. This network architecture enables network interconnectivity between institutions in different regions within the enterprise. The branch apparatuses and the central apparatus are network apparatuses, such as routers.

S201: receiving a public IP address sent by the central apparatus after determining that a NAT gateway exists between the branch apparatus and the public network.

Wherein, the public IP address is an IP address of a target interface included in a target NAT gateway, the target interface being connected to the public network, and the target NAT gateway being a NAT gateway closest to the public network among NAT gateways between the branch apparatus and the public network.

In one example of the present disclosure, the branch apparatus and the central apparatus perform hash operations on their own IP addresses, port numbers, cookies, or serial peripheral interface, spi, respectively and send the operation results to the opposite end. The branch apparatus and the central apparatus compare their own operation results with the operation results sent by the opposite end respectively to determine whether a NAT gateway exists between them and the location of the existing NAT gateway.

In detail, the branch apparatus and the central apparatus may determine whether a NAT gateway exists between them and determine the location of the NAT gateway based on the NAT detection and NAT gateway location detection methods provided by IKE in related technologies. For details, please refer to RFC3498 (IKEv1) and RFC7296 (IKEv2), which will not be repeated here.

In addition, there are the following four scenarios for the distribution of a NAT gateway between the branch apparatus and the central apparatus.

Scenario 1: refer to FIG. 3, which is a schematic diagram of a first distribution of a NAT gateway provided by an example of the present disclosure.

The figure includes a branch apparatus, a central apparatus, and an ISP between them which represents the public network. The branch apparatus and the central apparatus are connected to local area networks, LANs, respectively. The dashed line between the branch apparatus and the central apparatus indicates that they are connected through an IPsec VPN tunnel. As may be seen from the figure, in this scenario, there is no NAT gateway between the branch apparatus and the central apparatus.

In this scenario, both the branch apparatus and the central apparatus are exposed to the public network, and both have stable public IP addresses or domain names, with no NAT gateway between them.

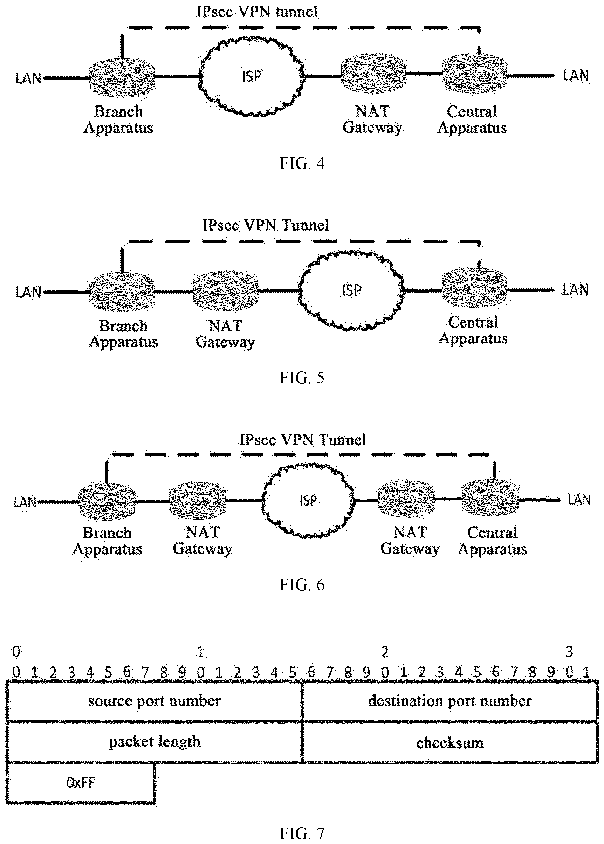

Scenario 2: refer to FIG. 4, which is a schematic diagram of a second distribution of a NAT gateway provided by an example of the present disclosure.

The figure includes a branch apparatus, a central apparatus, an ISP between them which represents the public network, and a NAT gateway. The branch apparatus and the central apparatus are connected to LANs respectively. The dashed line between the branch apparatus and the central apparatus indicates that they are connected through an IPsec VPN tunnel. As may be seen from the figure, in this scenario, the NAT gateway is located between the central apparatus and the public network.

The NAT gateway in this network is often used as a firewall to filter traffic destined for the central apparatus before the central apparatus (i.e., between the central apparatus and the ISP).

Scenario 3: refer to FIG. 5, which is a schematic diagram of a third distribution of a NAT gateway provided by an example of the present disclosure.

The figure includes a branch apparatus, a central apparatus, an ISP between them which represents the public network, and a NAT gateway. The branch apparatus and the central apparatus are connected to LANs respectively. The dashed line between the branch apparatus and the central apparatus indicates that they are connected through an IPsec VPN tunnel. As may be seen from the figure, in this scenario, the NAT gateway is located between the branch apparatus and the public network.

This type of network is common. In this scenario, the central apparatus may obtain public IP information, but there may be one or more NAT gateways before the branch apparatus (i.e., between the branch apparatus and the public network). FIG. 5 shows a case where there is one NAT gateway.

Scenario 4: refer to FIG. 6, which is a schematic diagram of a fourth distribution of NAT gateways provided by an example of the present disclosure.

The figure includes a branch apparatus, a central apparatus, an ISP between them which represents the public network, and NAT gateways. The branch apparatus and the central apparatus are connected to LANs respectively. The dashed line between the branch apparatus and the central apparatus indicates that they are connected through an IPsec VPN tunnel. As may be seen from the figure, in this scenario, NAT Gateway 2 is located between the branch apparatus and the public network, and NAT Gateway 1 is located between the central apparatus and the public network. That is, in this scenario, there is a NAT gateway between the branch apparatus and the public network, and there is also a NAT gateway between the central apparatus and the public network.

In detail, the scenario where there is a NAT gateway between the branch apparatus and the public network corresponds to the aforementioned Scenario 3 and Scenario 4.

In one example of the present disclosure, the public network IP address is included in a message sent from the central apparatus to the branch apparatus. This message is sent by the central apparatus to the branch apparatus after both the central apparatus to the branch apparatus have succeeded in IKE negotiation and determined the existence of an NAT gateway between the branch apparatus and the public network. The message may undergo encryption and authentication through IPsec services to ensure the message's security.

Besides, it should be noted that in response to determine that there is one NAT gateway between the branch apparatus and the public network, this NAT gateway is the target NAT gateway. In response to determine that there are multiple NAT gateways between the branch apparatus and the public network, the NAT gateway closest to the public network is the target NAT gateway. The IP address of the target interface connected to the public network of the target NAT gateway is the IP address of the branch apparatus exposed to the public network. The central apparatus communicates with the branch apparatus through this IP address.

S202: sending a probe request packet to the target interface.

Wherein, the probe request packet includes a destination IP address, the destination IP address being different from the public IP address and in the same network segment as the public IP address.

The probe request packet may be a random address different from the public network IP address within the network segment where the public network IP address is located. For example, in response to determining the public network IP is 1.0.0.1, then the destination IP address of the probe packet may be any value other than 1.0.0.1 within 1.0.0.0/24, such as 1.0.0.3. However, in theory, the smaller the selected value of the destination IP address is, the subsequently determined number of network apparatuses in the forwarding path for forwarding the probe request packet will be more accurate. Therefore, the smallest possible IP address may be selected as the destination IP address.

In one example of the present disclosure, the probe request packet may be an internet control packet protocol, ICMP, request packet.

S203: obtaining the number of network apparatuses in a forwarding path for forwarding the probe request packet based on a probe result.

In one example of the present disclosure, multiple alternative numbers may be preset, with a preset fixed difference value between adjacent alternative numbers. The branch apparatus sends probe request packets with the second TTL set to these alternative numbers respectively, and determines whether a probe response packet is received respectively after sending the probe request packet corresponding to each alternative number, as the probe result. A number is determined from the alternative numbers, wherein for this number, no probe response packet is received, but for all other alternative numbers less than this number, probe response packets are received.

The probe response packet may be an ICMP TTL expired packet.

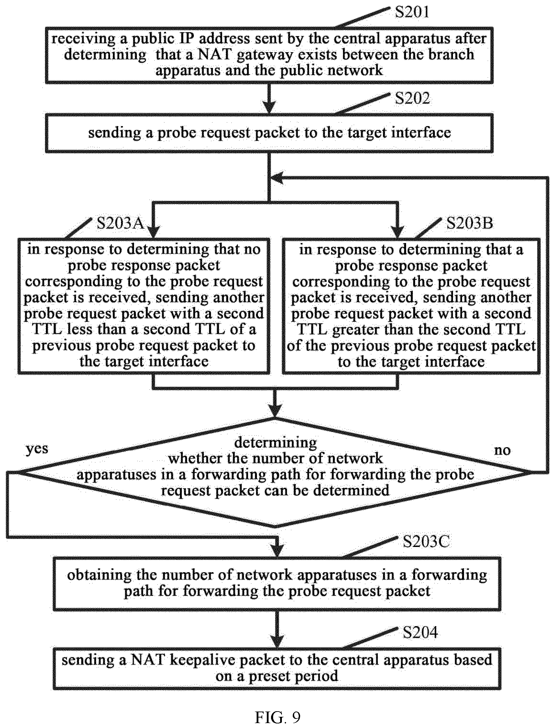

In another example of the present disclosure, the number may be determined through processes S203A to S203C shown in FIG. 9 below, which will not be detailed here.

Since the target NAT gateway is located between the branch apparatus and the public network, the branch apparatus is required to access the public network via the target NAT gateway. the number is equivalent to a distance from the branch apparatus to the public network.

S204: sending a NAT keepalive packet to the central apparatus based on a preset period.

The NAT keepalive packet includes a first time to live, TTL, the first TTL being a sum of the number and a first value.

Since the first TTL of the NAT keepalive packet is the number plus the first value, the NAT keepalive packet will reach the target NAT gateway after being forwarded through the number of network apparatuses, and then will be discarded after being forwarded through an extra network apparatuses whose number is the first value. The target NAT gateway is the NAT gateway closest to the public network among NAT gateways between the branch apparatus and the public network, therefore, as long as the NAT keepalive packet may be forwarded to the target NAT gateway, all the NAT gateways between the branch apparatus and the public network may receive the NAT keepalive packet, and thus may be kept alive. Therefore, in order to save forwarding resources, the NAT keepalive packet may be discarded as soon as possible after being forwarded by the target NAT gateway. So, the first TTL of the NAT packet needs to be greater than the number, and the value of the first TTL may be as small as possible, that is, the first value may be as small as possible, and the first value is less than a preset value. For example, the first value may be 1, 2, 3, etc.

Besides, the preset period may be 20s, 30s, 40s, 1 minute, etc., and the specific value is not limited in the examples of the present disclosure.

Refer to FIG. 7, which is a schematic diagram of the format of a NAT keepalive packet provided in an example of the present disclosure.

As may be seen from the figure, the NAT keepalive packet includes a source port number, a destination port number, a packet length, a checksum, and 0xFF. 0xFF is the fixed payload of the NAT keepalive packet. Besides, a common destination port number for NAT keepalive packets is UDP 4500. The most significant bit, MSB, represents the sequence numbers of the bits.

From the above, in the solution provided by the examples of the present disclosure, after the branch apparatus receives the public network IP address sent by the central apparatus after determining that a NAT gateway exists between the branch apparatus and the public network, the branch apparatus determines the number of network apparatuses in the forwarding path between the branch apparatus and the target interface. The target interface is the interface connecting to the public network on the NAT gateway which is closest to the public network among NAT gateways between the branch apparatus and the public network. After determining the number, the NAT keepalive packet is sent based on the preset period, and the first TTL of the NAT keepalive packet is the sum of the number and the first value. That is, the first TTL is greater than the number of network apparatuses between the branch apparatus and the target interface, so the NAT keepalive packet may be sent to the target NAT gateway for reception. Since the target NAT gateway is the NAT gateway closest to the public network among NAT gateways between the branch apparatus and the public network, all NAT gateways between the branch apparatus and the public network may receive the NAT keepalive packet, thereby keeping them alive. However, the TTL of the NAT keepalive packet is the sum of the number and the first value, so the NAT packet will be discarded soon after passing through the target interface and will hardly be transmitted in the public network, let alone transmitted to the central apparatus. Therefore, the NAT keepalive packet will not affect the traffic forwarding of the central apparatus.

Furthermore, since the payload carried in the NAT keepalive packet is 0xFF, the data volume is small, so the NAT keepalive packet belongs to a UDP small packet. In a case that the solution in related arts is adopted for NAT keepalive, the central apparatus will receive a large number of UDP small packets; and for the central apparatus that forwards packets based on CPU, processing UDP small packets consumes more CPU resources, thus further affecting the normal forwarding of traffic. However, in the present disclosure, the NAT keepalive packet will not be sent to the central apparatus, so the NAT keepalive packet will not affect the central apparatus.

Furthermore, in another example of the present disclosure, before implementing the example of the present disclosure, in response to determining that the IKE negotiation is performed between the central apparatus and the branch apparatus for the first time, both parties may inform each other whether they support using the solution provided in the example of the present disclosure to perform NAT keepalive. In response to determining that both parties support using the solution provided in the example of the present disclosure to perform NAT keepalive, the solution provided in the example of the present disclosure is implemented by default to perform NAT keepalive after the IKE negotiation is successful. In response to determining one of the parties does not support the solution provided in the example of the present disclosure, the solution in the related art may continue to be used to perform NAT keepalive.

In one example of the present disclosure, the above method further includes the following process A.

Process A: in response to determining that no NAT gateway exists between the branch apparatus and the public network, no NAT keepalive packet is sent.

In detail, the situation where no NAT gateway exists between the branch apparatus and the public network includes the aforementioned scenario 1, i.e., no NAT gateway exists between the branch apparatus and the central apparatus, and the aforementioned scenario 2, i.e., a NAT gateway exists between the branch apparatus and the central apparatus, but the NAT gateway is located between the public network and the central apparatus.

In response to determining that it is the aforementioned scenario 1, since no NAT gateway exists, NAT keepalive is not required. In response to determining it is the aforementioned scenario 2, in theory, the central apparatus should perform NAT keepalive. However, since the configuration of the NAT gateway before the central apparatus is often fixed, no extra NAT keepalive is required, and the NAT gateway will perform keepalive by default, so neither the branch apparatus nor the central apparatus needs to perform keepalive.

It may be seen from the above that in the example of the present disclosure, the branch apparatus needs to perform NAT keepalive in response to determining that a NAT gateway exists between the branch apparatus and the public network. In response to determining that no NAT gateway exists between the branch apparatus and the public network, the branch apparatus does not need to perform extra NAT keepalive operations, thereby saving the resource overhead of the branch apparatus.

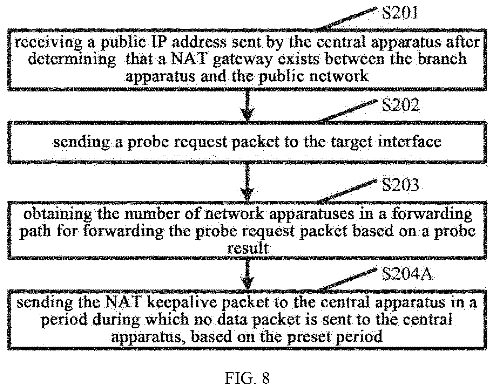

Referring to FIG. 8, a flow schematic diagram of a second NAT keepalive method provided in an example of the present disclosure is provided. Compared with the example shown in FIG. 2 above, the above process S204 may be implemented through the following process S204A.

S204A: sending the NAT keepalive packet to the central apparatus in a period during which no data packet is sent to the central apparatus, based on the preset period.

In one example of the present disclosure, in response to determining that the branch apparatus sends a data packet to the central apparatus within the preset period, the NAT gateway between the branch apparatus and the public network may receive the data packet, determine that the branch apparatus is still in the running state, and therefore will not disconnect with the branch apparatus, enabling to achieve the effect of keepalive, and thus enabling the branch apparatus to not need to send an extra NAT keepalive packet. Otherwise, the branch apparatus needs to send an extra NAT keepalive packet in the period during which no data packet is sent to the central apparatus.

It may be seen from the above that in the example of the present disclosure, the branch apparatus sends a NAT keepalive packet in the period during which no data packet is sent to the central apparatus, thereby reducing the number of NAT keepalive packets that need to be sent by the branch apparatus and reducing the resource consumption of the branch apparatus for sending NAT keepalive packets.

In one example of the present disclosure, the above probe request packet further includes a second TTL. Referring to FIG. 9 which is a schematic diagram of a third NAT keepalive method provided in an example of the present disclosure. Compared with the example shown in FIG. 2, the aforementioned process S203 may be implemented through the following processes S203A to S203C.

S203A: in response to determining that no probe response packet corresponding to the probe request packet is received, sending a probe request packet with a second TTL less than the second TTL of the previous probe request packet again to the target interface.

For example, the second TTL of the first probe request packet may be 100, 50, etc., and may be set based on actual requirements.

In response to determining that no probe response packet is received, it indicates that the probe request packet is sent to the destination IP address within the current second TTL, that is, the second TTL is greater than or equal to the number of network apparatuses in the forwarding path from the branch apparatus to the destination IP address, which also means that the current second TTL is greater than or equal to the number of network apparatuses in the forwarding path from the branch apparatus to the target interface.

In this case, in order to determine the number of network apparatuses in the forwarding path from the branch apparatus to the target interface with accuracy, the second TTL is reduced, and a new probe request packet is sent again.

S203B: in response to determining that the probe response packet corresponding to the probe request packet is received, sending a probe request packet with a second TTL greater than the second TTL of the previous probe request packet again to the target interface.

Contrary to the situation in the process S203A, in response to determining that the probe response packet is received, it indicates that the current second TTL is greater than the number of network apparatuses in the forwarding path from the branch apparatus to the target interface. In this case, in order to determine the number of network apparatuses in the forwarding path from the branch apparatus to the target interface with accuracy, the second TTL is increased, and a new probe request packet is sent again.

In addition, in one example of the present disclosure, in response to determining that probe request packets are sent in succession, the adjustment magnitude of the second TTL decreases. For example, in response to determining that it is the adjustment for the first time, the magnitude of reducing the second TTL is 50, and in response to determining that it is the adjustment for the second time, the magnitude of increasing the second TTL is 30, etc.

In one case, the binary search method may be applied to adjust the second TTL. For example, the second TTL of the first sent probe request packet is 100, and then the second TTL is reduced. Using the binary search method, the second TTL of the second sent probe request packet is half of 100, i.e., the reduction magnitude is 50, and the second TTL is adjusted to 50. After that, the second TTL is increased, and the second TTL of the third sent probe request packet should be between 50 and 100. Using the binary search method, the second TTL is increased by (100-50)/2=25, that is, the second TTL of the third sent probe request packet is 75, and so on.

**In** response to determining that the number of network apparatuses in the forwarding path for forwarding the probe request packet cannot be determined, returning to execute process S203A or process S203B to continue the above probe of the number; otherwise, executing process S203C.

S203C: determining the number of network apparatuses in the forwarding path for forwarding the probe request packet.

Among them, in response to determining that the second TTL of the probe request packet is greater than this number, no probe response packet corresponding to the probe request packet is received, and in response to determining that the second TTL of the probe request packet is less than this number, the probe response packet corresponding to the probe request packet is received.

It may be seen from the above that in the example of the present disclosure, by adjusting the second TTL of the probe request packet and sending the probe request packet in succession, and determining the size relationship between the current second TTL and the number of network apparatuses between the branch apparatus and the target interface to be probed based on whether the probe response packet is received for the different values of the second TTL, the specific value of the number to be probed is determined with accuracy.

Corresponding to the NAT keepalive method applied to the branch apparatus described above, an example of the present disclosure further provides a branch apparatus.

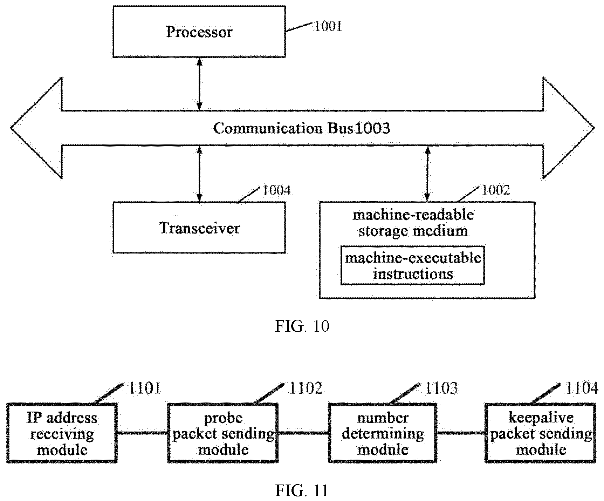

Refer to FIG. 10, which is a schematic diagram of a structure of a branch apparatus provided in an example of the present disclosure. The branch apparatus, which communicates with a central apparatus through a public network, includes:
a processor 1001;
a transceiver 1004;
a machine-readable storage medium 1002, which stores machine-executable instructions executable by the processor 1001, wherein the machine-executable instructions cause the processor 1001 to perform the following processes:
   receiving a public IP address sent by the central apparatus after determining that a NAT gateway exists between the branch apparatus and the public network, wherein the public IP address is an IP address of a target interface included in a target NAT gateway, the target interface being connected to the public network, and the target NAT gateway being a NAT gateway closest to the public network among NAT gateways between the branch apparatus and the public network;
   sending a probe request packet to the target interface, wherein the probe request packet includes a destination IP address, the destination IP address being different from the public IP address but in the same network segment;
   obtaining the number of network apparatuses in a forwarding path for forwarding the probe request packet based on a probe result;
   sending a NAT keepalive packet to the central apparatus based on a preset period, wherein the NAT keepalive packet includes a first TTL, the first TTL being a sum of the number and a first value.

As shown in FIG. 10, the network apparatus may further include a communication bus 1003. The processor 1001, the machine-readable storage medium 1002, and the transceiver 1004 communicate with each other through the communication bus 1003, which may be a Peripheral Component Interconnect, PCI, bus, an extended industry bus or an Extended Industry Standard Architecture, EISA, bus, or the like. The communication bus 1003 may be divided into an address bus, a data bus, a control bus, and the like.

The transceiver 1004 may be a wireless communication module that interacts with other apparatuses under the control of the processor 1001.

The machine-readable storage medium 1002 may include random access memory, RAM, and may also include non-volatile memory, NVM, such as one or more disk storage apparatus. Besides, the machine-readable storage medium 1002 may be one or more storage device remote away the processor.

**The** processor 1001 may be a general-purpose processor, including a central processing unit, CPU, a network processor, NP, and the like; it may also be a digital signal processing, DSP, unit, a disclosure specific integrated circuit, ASIC, a field-programmable gate array, FPGA, or other programmable logic apparatuses, discrete gate or transistor logic apparatuses, discrete hardware components.

It is evident from the above that, in the solution provided by an example of the present disclosure, after receiving the public IP address sent by a central apparatus after determining that a NAT gateway exists between the branch apparatus and the public network, the branch apparatus determines the number of network apparatuses in the forwarding path between the branch apparatus and the target interface. The target interface is an interface connecting to the public network on the NAT gateway which is closest to the public network among NAT gateways between the branch apparatus and the public network. After determining the number, the NAT keepalive packet is sent based on the preset period, and the first TTL of the NAT keepalive packet is the sum of the number and the first value. That is, the first TTL is greater than the number of network apparatuses between the branch apparatus and the target interface, so the NAT keepalive packets may be sent to the target NAT gateway for reception. Since the target NAT gateway is the NAT gateway closest to the public network among NAT gateways between the branch apparatus and the public network, all NAT gateways between the branch apparatus and the public network may receive the NAT keepalive packet, thereby keeping them alive. However, the TTL of the NAT keepalive packet is the sum of the number and the first value, so the NAT packet will be discarded soon after passing through the target interface and will hardly be transmitted in the public network let alone transmitted to the central apparatus. Therefore, the NAT keepalive packet will not affect the traffic forwarding of the central apparatus.

In one example of the present disclosure, the probe request packet further includes a second TTL;
the process of obtaining the number of network apparatuses in the forwarding path for forwarding the probe request packet based on the probe result includes:
in response to determining that no probe response packet corresponding to the probe request packet is received, sending another probe request packet with a second TTL smaller than a second TTL of a previous probe request packet to the target interface, or in response to determining that a probe response packet corresponding to the probe request packet is received, sending another probe request packet with a second TTL greater than the second TTL of the previous probe request packet to the target interface;
repeating the process of sending another probe request packet with a second TTL smaller than a second TTL of a previous probe request packet to the target interface in response to determining that no probe response packet corresponding to the probe request packet is received, or sending another probe request packet with a second TTL greater than the second TTL of the previous probe request packet to the target interface in response to determining that a probe response packet corresponding to the probe request packet is received, until the number of network apparatuses in the forwarding path for forwarding the probe request packet is determined;
wherein, in response to determining that the second TTL of a probe request packet is greater than the number and no probe response packet corresponding to the probe request packet is received, or in response to determining that the second TTL of a probe request packet is smaller than the number and a probe response packet corresponding to the probe request packet is received, the number is considered as determined.

It is evident from the above that, in an example of the present disclosure, by adjusting the second TTL of the probe request packets by degrees and sending probe request packets in succession, determining the size relationship between the current second TTL and the number of network apparatuses between the branch apparatus and the target interface to be probed based on whether the probe response packet is received for different values of the second TTL, the specific value of the number to be probed is determined with accuracy.

In one example of the present disclosure, the process of sending the NAT keepalive packet to the central apparatus based on a preset period includes:
sending the NAT keepalive packet to the central apparatus in the period during which no data packet is sent to the central apparatus, based on the preset period.

It is evident from the above that, in an example of the present disclosure, the branch apparatus sends the NAT keepalive packet in the period during which no data packet is sent to the central apparatus, thereby reducing the number of NAT keepalive packets that need to be sent by the branch apparatus and reducing the resource consumption of the branch apparatus for sending NAT keepalive packets.

In one example of the present disclosure, the machine-executable instructions further cause the processor 1001 to execute the following process:
in response to determining that there is no NAT gateway between the branch apparatus and the public network, then sending no NAT keepalive packet.

It is evident from the above that, in an example of the present disclosure, the branch apparatus needs to perform NAT keepalive in response to determining that there is a NAT gateway between the branch apparatus and the public network. In response to determining that there is no NAT gateway between the branch apparatus and the public network, the branch apparatus does not need to perform extra NAT keepalive operations, thereby saving resource costs for the branch apparatus.

Corresponding to the NAT keepalive method applied to a branch apparatus, an example of the present disclosure also provides a NAT keepalive device applied to a branch apparatus.

Refer to FIG. 11, which is a schematic diagram of the structure of a NAT keepalive apparatus provided by an example of the present disclosure, wherein the NAT keepalive device is applied to the branch apparatus which communicates with a central apparatus through a public network, and the NAT keepalive device includes:
an IP address receiving module 1101, to receive a public IP address sent by the central apparatus after determining that a NAT gateway exists between the branch apparatus and the public network, wherein the public IP address is the IP address of a target interface included in the target NAT gateway, the target interface connects to the public network, and the target NAT gateway is the NAT gateway closest to the public network among NAT gateways between the branch apparatus and the public network;
a probe packet sending module 1102, to send a probe request packet to the target interface, wherein the probe request packet includes a destination IP address that is different from the public IP address and in the same network segment as the public IP address;
a number determining module 1103, to obtain the number of network apparatuses in a forwarding path for forwarding the probe request packet based on a probe result;
**a** keepalive packet sending module 1104, to send a NAT keepalive packet to the central apparatus based on a preset period, wherein the NAT keepalive packet includes a first TTL, the first TTL being the sum of the number and a first value.

It is evident from the above that, in the solution provided by an example of the present disclosure, after receiving the public IP address sent by the central apparatus after determining that a NAT gateway exists between the branch apparatus and the public network, the branch apparatus determines the number of network apparatuses in the forwarding path between the branch apparatus and the target interface. The target interface is an interface connecting to the public network on the NAT gateway which is closest to the public network among NAT gateways between the branch apparatus and the public network. After determining the number, the NAT keepalive packet is sent based on the preset period, and the first TTL of the NAT keepalive packet is the sum of the number and the first value. That is, the first TTL is greater than the number of network apparatuses between the branch apparatus and the target interface, so the NAT keepalive packet may be sent to the target NAT gateway for reception. Since the target NAT gateway is the NAT gateway closest to the public network among NAT gateways between the branch apparatus and the public network, all NAT gateways between the branch apparatus and the public network may receive the NAT keepalive packet, thereby keeping them alive. However, the TTL of the NAT keepalive packet is the sum of the number and the first value, so the NAT packet will be discarded soon after passing through the target interface and will hardly be transmitted in the public network, let alone transmitted to the central apparatus. Therefore, the NAT keepalive packet will not affect the traffic forwarding of the central apparatus.

In one example of the present disclosure, the probe request packet further includes a second TTL; the number determining module 1103 is further to:
sending another probe request packet with a second TTL smaller than a second TTL of a previous probe request packet to the target interface in response to determining that no probe response packet corresponding to the probe request packet is received, or sending another probe request packet with a second TTL greater than the second TTL of the previous probe request packet to the target interface in response to determining that a probe response packet corresponding to the probe request packet is received;
repeating the process of sending another probe request packet with a second TTL smaller than a second TTL of a previous probe request packet to the target interface in response to determining that no probe response packet corresponding to the probe request packet is received, or sending another probe request packet with a second TTL greater than the second TTL of the previous probe request packet to the target interface in response to determining that a probe response packet corresponding to the probe request packet is received, until the number is determined.

From the above, in the example of the present disclosure, by adjusting the second TTL of the probe request packet by degrees and sending the probe request packets in succession, determining the magnitude relationship between the current second TTL and the number of network apparatuses between the branch apparatus and the target interface to be probed based on whether the probe response packet is received for the different values of the second TTL, the specific value of the number to be probed is determined with accuracy.

In one example of the present disclosure, the keepalive packet sending module 1104 is to:
sending the NAT keepalive packet to the central apparatus in a period during which no data packet is sent to the central apparatus, based on the preset period.

**It** may be seen from the above that in the example of the present disclosure, the branch apparatus sends the NAT keepalive packet in the period during which no data packet is sent to the central apparatus, thereby reducing the number of NAT keepalive packets that the branch apparatus needs to send and the resource consumption of the branch apparatus for sending the NAT keepalive packets.

In one example of the present disclosure, the device further includes:
a keepalive packet non-sending module, to send no NAT keepalive packet in response to determining that there is no NAT gateway between the branch apparatus and the public network.

It may be seen from the above that in the example of the present disclosure, the branch apparatus needs to perform NAT keepalive in response to determining that a NAT gateway exists between the branch apparatus and the public network. In response to determining that there is no NAT gateway between the branch apparatus and the public network, the branch apparatus does not need to perform extra NAT keepalive operations, thereby saving the resource overhead of the branch apparatus.

In another example provided by the present disclosure, a computer-readable storage medium is also provided, which stores a computer program, wherein the computer program, when executed by a processor, carries out the processes of any of the above-mentioned NAT keepalive methods.

In another example provided by the present disclosure, a computer program product containing instructions is also provided, which, when run on a computer, causes the computer to carry out any of the NAT keepalive methods in the above-mentioned examples.

In the above-mentioned examples, they may be implemented in whole or in part through software, hardware, firmware, or any combination thereof. When implemented using software, they may be implemented in whole or in part in the form of a computer program product. The computer program product includes one or more computer instructions. When the computer program instructions are loaded and executed on a computer, they generate processes or functions described in the examples of the present disclosure in whole or in part. The computer may be a general-purpose computer, a dedicated computer, a computer network, or other programmable apparatuses. The computer instructions may be stored in a computer-readable storage medium or transmitted from one computer-readable storage medium to another. For example, the computer instructions may be transmitted from one website, computer, server, or data center to another website, computer, server, or data center via wired (such as coaxial cable, optical fiber, digital subscriber line, DSL) or wireless (such as infrared, radio, microwave, etc.) means. The computer-readable storage medium may be any available medium accessible by a computer or a data storage apparatus integrating one or more available media, such as a server or data center. The available medium may be a magnetic medium (such as a floppy disk, hard disk, magnetic tape), an optical medium (such as a DVD), or a semiconductor medium (such as a solid state disk, SSD), etc.

It should be noted that in this document, relational terms such as first and second are used to distinguish one entity or operation from another entity or operation, and do not necessarily require or imply any such actual relationship or order between these entities or operations. Moreover, the terms "include," "contain," or any other variants are intended to cover non-exclusive inclusions, such that a process, method, article, or apparatus that includes a series of elements includes not only those elements but also other elements not explicitly listed, or further includes elements inherent to such process, method, article, or apparatus. In the absence of more restrictions, elements defined by the statement "including a ..." do not exclude the presence of extra identical elements in the process, method, article, or apparatus that includes the elements.

The various examples in this specification are described in a related manner. The same or similar parts between the various examples may refer to each other, and each example mainly explains the differences from other examples. In particular, for the examples of the branch apparatus, apparatus, computer-readable storage medium, and computer program product, since they are similar to the method example, the description is relatively simple, and relevant parts may refer to the partial description of the method example.

The above description is the preferred examples of the present disclosure and is not used to limit the protection scope of the present disclosure. Any modifications, equivalent substitutions, improvements, etc., made within the spirit and principles of the present disclosure, are included within the protection scope of the present disclosure.

## Claims

1. A communication method applied to a branch apparatus which communicates with a central apparatus through a public network, wherein the method comprises:
receiving a public internet protocol, IP, address sent by the central apparatus, wherein the IP address is an IP address of a target interface comprised in a target NAT gateway, the target interface being connected to the public network, and the target NAT gateway being a NAT gateway closest to the public network among NAT gateways between the branch apparatus and the public network;
sending a probe request packet to the target interface, wherein the probe request packet comprises a destination IP address, which is different from the public IP address and in the same network segment as the public IP address;
obtaining the number of network apparatuses in a forwarding path for forwarding the probe request packet based on a probe result;
sending a NAT keepalive packet to the central apparatus based on a preset period, wherein the NAT keepalive packet comprises a first time to live ,TTL, the first TTL being a sum of the number and a first value.

2. The method of claim 1, wherein the probe request packet further comprises a second TTL;
obtaining the number of network apparatuses in the forwarding path for forwarding the probe request packet based on the probe result comprises:
sending another probe request packet with a second TTL smaller than a second TTL of a previous probe request packet to the target interface in response to determining that no probe response packet corresponding to the probe request packet is received, or sending another probe request packet with a second TTL greater than the second TTL of the previous probe request packet to the target interface in response to determining that a probe response packet corresponding to the probe request packet is received;
repeating the process of sending another probe request packet with a second TTL smaller than a second TTL of a previous probe request packet to the target interface in response to determining that no probe response packet corresponding to the probe request packet is received, or sending another probe request packet with a second TTL greater than the second TTL of the previous probe request packet to the target interface in response to determining that a probe response packet corresponding to the probe request packet is received, until the number is determined;
wherein, in response to determining that the second TTL of a probe request packet is greater than the number and no probe response packet corresponding to the probe request packet is received, or in response to determining that the second TTL of a probe request packet is smaller than the number and a probe response packet corresponding to the probe request packet is received, the number is considered as determined.

3. The method of claim 1, wherein sending the NAT keepalive packet to the central apparatus based on the preset period comprises:
sending the NAT keepalive packet to the central apparatus in a period during which no data packet is sent to the central apparatus, based on the preset period.

4. The method of any one of claims 1-3, wherein the method further comprises:
in response to determining that no NAT gateway exists between the branch apparatus and the public network, sending no NAT keepalive packet.

5. A branch apparatus, which communicates with a central apparatus through a public network, wherein the branch apparatus comprises:
a processor;
a transceiver;
a machine-readable storage medium having stored thereon machine-executable instructions executable by the processor, wherein the machine-executable instructions cause the processor to execute following processes:
receiving a public internet protocol IP address sent by the central apparatus, wherein the public IP address is an IP address of a target interface comprised in a target NAT gateway, the target interface being connected to the public network, and the target NAT gateway being a NAT gateway closest to the public network among NAT gateways between the branch apparatus and the public network;
sending a probe request packet to the target interface, wherein the probe request packet comprises a destination IP address, which is different from the public IP address and in the same network segment as the public IP address;
obtaining the number of network apparatuses in a forwarding path for forwarding the probe request packet based on a probe result;
sending a NAT keepalive packet to the central apparatus based on a preset period, wherein the NAT keepalive packet comprises a first time to live TTL, the first TTL being a sum of the number and a first value.

6. The apparatus of claim 5, wherein the probe request packet further comprises a second TTL;
obtaining the number of network apparatuses in the forwarding path for forwarding the probe request packet based on the probe result comprises:
sending another probe request packet with a second TTL smaller than a second TTL of a previous probe request packet to the target interface in response to determining that no probe response packet corresponding to the probe request packet is received, or sending another probe request packet with a second TTL greater than the second TTL of the previous probe request packet to the target interface in response to determining that a probe response packet corresponding to the probe request packet is received;
repeating the process of sending another probe request packet with a second TTL smaller than a second TTL of a previous probe request packet to the target interface in response to determining that no probe response packet corresponding to the probe request packet is received, or sending another probe request packet with a second TTL greater than the second TTL of the previous probe request packet to the target interface in response to determining that a probe response packet corresponding to the probe request packet is received, until the number is determined;
wherein, in response to determining that the second TTL of a probe request packet is greater than the number and no probe response packet corresponding to the probe request packet is received, or in response to determining that the second TTL of a probe request packet is smaller than the number and a probe response packet corresponding to the probe request packet is received, the number is considered as determined.

7. The apparatus of claim 5, wherein sending the NAT keepalive packet to the central apparatus based on the preset period comprises:
sending the NAT keepalive packet to the central apparatus in a period during which no data packet is sent to the central apparatus, based on the preset period.

8. The apparatus of any one of claims 5-7, wherein the machine-executable instructions cause the processor to execute a following process:
in response to determining that no NAT gateway exists between the branch apparatus and the public network, sending no NAT keepalive packet.
